(19) **Europäisches Patentamt / European Patent Office / Office européen des brevets**

(11) **EP 2 227 023 A1**

(12) **EUROPEAN PATENT APPLICATION**

(43) Date of publication:
**08.09.2010 Bulletin 2010/36**

(51) Int Cl.:
*H04N 7/26* (2006.01)    *H04N 7/30* (2006.01)

(21) Application number: **09250628.6**

(22) Date of filing: **05.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **BRITISH TELECOMMUNICATIONS public limited company**
**London**
**EC1A 7AJ (GB)**

(72) Inventor: **The designation of the inventor has not yet been filed**

(74) Representative: **Lloyd, Barry George William**
**BT Group Legal**
**Intellectual Property Department - PP C5A**
**BT Centre**
**81 Newgate Street**
**London**
**EC1A 7AJ (GB)**

(54) **Video streaming**

(57)     A video sequence to be encoded is divided into a plurality of temporal portions, and analysed to determine (at least for each portion after the first), in accordance with a plurality of encoding quality settings, (i) a quality metric for the portion and (ii) the number of bits generated by encoding the portion at that quality setting.

These data are analysed, for example using a Viterbi-like trellis, to choose a set of quality settings, one per portion, that tends to minimise a combined quality cost for the sequence. This the combined quality cost is the sum of individual quality costs each of which is a function of the quality metric of the respective encoded portion. The sequence is encoded using the chosen quality settings. In order to determine each individual quality cost, despite not knowing precisely what network throughput will be available at any given time in the future, one proceeds by estimating receiver buffer fullness and its standard deviation. From said estimates, the probability of buffer underflow and or overflow is obtained, the individual quality costs being a function also of the underflow and/or overflow probability.

FIGURE 2

**EP 2 227 023 A1**

**Description**

This invention relates to video streaming over networks, and is particularly useful in the case of networks with a non-deterministic bandwidth availability. Such a situation is typical of the Internet, where packet delivery is by best-effort, or where the physical medium has an inherently non-deterministic behaviour, such as wireless connections.

This invention is applicable both in situations where a compressed asset is available in advance of delivery (such as Video on Demand), and where the complete asset is not available in advance (such as streaming a live event).

"Adaptive Streaming within the 3GPP Packet-Switched Streaming Service", IEEE Network, March/April 2006 is of interest in this context as it details a 3GPP standardised streaming service over mobile networks with variable transmission bandwidth due to the nature of wireless channels. This system uses RTP/UDP and reacts to frequent client buffer status messages via RTCP reports to choose between multiple fixed bit rate encodings or to change the rate of a live encoding system to ensure no buffer over or under runs.

Some embodiments of the invention will now be described, by way of example, with reference to the accompanying drawings.

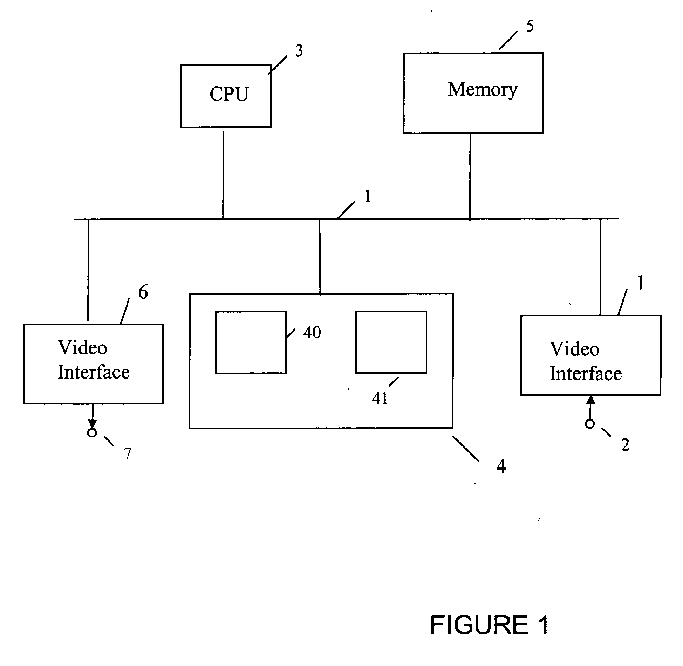

A server for streaming video includes a coding apparatus as shown in Figure 1, comprising a video interface 1 that receives digitally coded video signals, in uncompressed form, at a video input 2. A processor 3 operates under control of programs stored in disc storage 4 and has access to memory 5 and a video output buffer 6 that feeds a video output 7. The programs include a general purpose operating system 40 and video coding software 41 which implements one of more of the coding methods shortly to be described. The server transmits to a client, including a video decoder. This can be of conventional construction and is therefore not illustrated. It is however worth mentioning that the client includes a buffer for buffering received video data until it can be decoded.

In the streaming system envisioned, each media asset is partitioned into time slices, and each time slice is encoded at a number of qualities. The asset is streamed by sending time slices in temporal order from any of the different quality streams. Time-slices will typically be coded independently (e.g. as a closed group of pictures, where each group begins with an I-frame) but may also support a switching picture framework to allow more bit efficient concatenation. Stream switching as a mechanism to cope with dynamically changing bandwidth is a well known technique. Our objective here, however, is to select which quality to stream at each time-slice to maximise the perceptual quality of the overall stream, subject to the constraints of available bandwidth and client buffering.

In this description we consider that each time slice is a group of pictures (GOP) and is encoded with a fixed set of qualities. However, it should be noted that the invention is equally applicable to the case where a different set of qualities is used for each time slice. In the prototype, all GOPs were encoded in advance, though if desired they could be encoded as required, with a sufficient look-ahead that the necessary results are available when needed.

Encoding at quality level j is preferably performed as described in our co-pending European patent application no. 08250815.1 (agent's ref.A31594) wherein each index j corresponds to a respective fixed perceptual quality.

It is useful to consider the problem as that of choosing a path through a lattice, where each node represents the resulting buffer state (suitably quantised) after transmitting a time slice at a given quality, and each link represents a quality selection decision. The buffer states in the trellis need to be quantised to such a level that there are sufficient number of states to find an optimum solution. Our co-pending international patent application no. PCT/GB2008/003691 (agent's ref A31511) gives further details of a buffer state Viterbi trellis used for constant quality video encoding.

Evaluating the quality of a path through this lattice is not as simple as taking the average of the qualities of the individual slices. For instance, it is well-known that constant quality is preferable to variable quality, even though the variable quality stream may have a higher average quality (See D. Hands & K. Cheng, Subject responses to constant and variable quality video, Human Vision and Electronic Imaging XIII 2008, SPIE Electronic Imaging, San Jose, California, USA). It is also often suggested that over certain timescales, the perceived quality is biased towards the lower end of the qualities seen.

Here, we assume that we have some quality measure that can rank paths through this lattice. We calculate the cumulative quality in such a way that the cumulative quality metric up to any given point on the path is only dependent on the cumulative quality metric up to the previous time slice, and the quality transition from the previous time slice to the current one. This allows us to use a dynamic programming technique to select the highest quality path in a very efficient manner. Actually, our preferred metric is expressed as a cost (which is smaller, the higher is the quality).

We write the cost metric of a path through the lattice up to time slice i as;

$$C_{i+1} = f(q_i, q_{i-1}) + C_i$$

where $q_i$ is the quality selected for time slice $i$, and $C_i$ is the cumulative cost metric of a path up to (but not including) time slice i.

We can then use the Viterbi algorithm to select the highest quality path in a very efficient manner. Strictly speaking, the Viterbi constraints would preclude any dependence of $C_{i+1}$ on $q_{i-1}$, but in practice we find nevertheless that the above constraint produces good results.

Typically, when streaming video, a buffer is used to provide some decoupling from the delivery time of (compressed) media samples, and their playout time. This buffering allows smoothing of a variable delivery rate of media samples.

If the decoder buffer is allowed to underflow (i.e. media samples are delivered later than they should be for decoding and playout), or overflow (too many samples are delivered and cannot be stored), then the quality of the media playout is reduced. The nature of the reduction will depend on a number of factors, including the masking ability of the client, the transport protocol used and whether buffer overflow/underflow occurs for audio or video or some other type of media.

When streaming content, we need to achieve a balance between the data delivery rate over the network, and the rate at which data are removed from the buffer for playout, such that the buffer neither underflows nor overflows.

Generally, a timeslice encoded at higher quality will produce more data than one encoded at lower quality. Therefore, the use of higher quality timeslices will cause data to be played out from the client buffer at a higher rate, and will need a higher rate of delivery over the network to prevent buffer underflow.

It should also be noted that, in general, different timeslices encoded at the same quality will generate very different quantities of data. For video at least, the size of a compressed timeslice will depend very much on the content. It is clear that there is not a simple relationship between quality and the data rate of a timeslice.

Here we introduce a means for balancing quality against estimated future bandwidth to control the risk of buffer overflow or underflow. Since often we don't know what the delivery rate of the network will be in the future, we cannot know with certainty what paths we can deliver through the timeslice lattice.

To take this uncertainty into account, we associate with each future timeslice a probability distribution of the number of bits that we are likely to be able to deliver to the client between the current time and the time at which we complete delivery of that timeslice. As we propagate forward, we would expect the mean of this distribution to increase, as with more time we expect to deliver more bits. We would also expect the standard deviation of the distribution to increase, representing the increasing uncertainty as we move our estimate further into the future.

Given this probability distribution, and an estimate for the current client buffer fill, we can calculate the probability distribution of client buffer fullness for each future timeslice for each quality path leading to that timeslice. This will enable us to calculate the probability that a particular path through the lattice will cause a buffer underflow or overflow.

To choose the best path we need to extend our notion of cumulative quality to include the probability of a buffer underflow or overflow. Clearly, the way that underflow and overflow probabilities are incorporated into the cumulative metric will depend on the perceptual impact that an underflow or overflow has on the perception of overall quality. For instance, if media is being streamed using TCP, then a buffer overflow is of little consequence, since TCP's flow control mechanism will deal with it without any impact on perceived quality. However, a buffer underflow will be very noticeable, as it will typically cause a temporary loss of audio and frozen video. It may then be preferable to favour fuller buffers

This means that our cost metric now has the form;

$$C_{i+1} = f\left(q_i, q_{i-1}, o_i, u_i\right) + C_i$$

Where

$i$ and $i\text{-}1$ are timeslice indices

$o_i$ is the probability of buffer overflow just before we remove time slice $i+1$ from the buffer,

$u_i$ is the probability of buffer underflow just after we remove time slice $i$ from the buffer.

In the prototype, the cost was calculated in accordance with the following

$$C_{i+1} = C_i - A.q_i.T_i + K.abs(q_i - q_{i-1}) + K'.u_i + K''.o_i$$

where A, K, K' and K" are weighting factors, $T_i$ is the play-out (viewing) duration of the timeslice, and where q is measured on the continuous scale defined in ITU-R Recommendation BT.500, in which the quality terms bad, poor, fair and good are associated with values between 1 and 5 inclusive. Some weightings which gave good results were A = 1, K = 10, K' = 2.5, K" = 2.5 with $q_i$ in the range of 2.6 to 4.2.

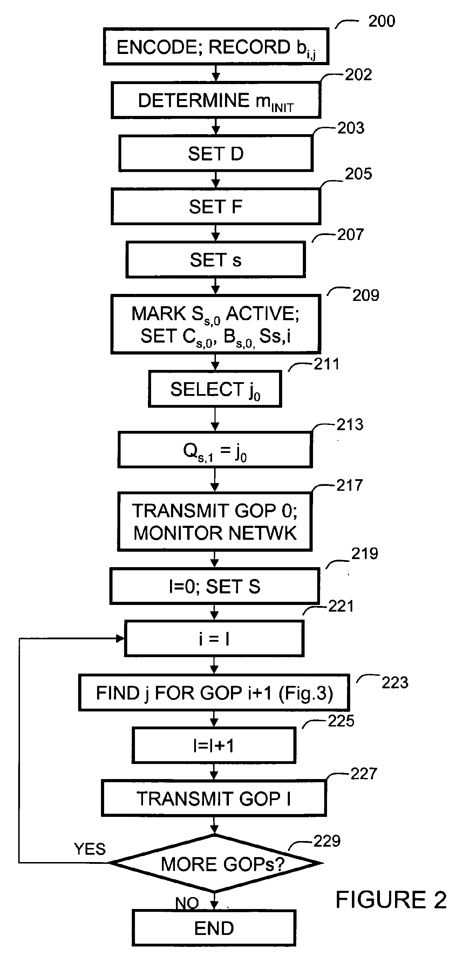

Figure 2 is a flowchart showing the operation of the coding. This considers one group of pictures at a time; if it is desired instead to process time slices each consisting of two or more groups, then for "GOP" read "time slice" or "sequence of GOPs".

The terminology for the variables is as follows:

I indicates the most recent GOP whose quality has been determined.

$m_1$ is the estimated bit rate, and is used to determine the quality of GOP I+1.

It may be helpful to think of a state $S_{s,i}$ being positioned in time just before GOP i is removed from the decoder buffer, although a state has no real concept of a time.

$B_{s,i}$ is the buffer level before GOP i is removed from the decoder buffer.

$Q_{s,i}$ is the quality selected for GOP i-1.

$C_{s,i}$ is the cost before the decision for GOP i is made. The choice for GOP i affects the next cost $C_{s,i+1}$.

Hence $Q_{s,0}$ is meaningless, $C_{s,0}$ and $C_{s,1}$ are zero (or any other arbitrary value) as they relate to levels before Viterbi has been used to make a decision.

200 Before transmission, the whole media asset is encoded at each of the quality levels, and the number of bits used to encode each GOP i at each quality j, $b_{i,j}$, is recorded.

202 When transmission is about to start, an initial estimate is made of the mean bit rate at which delivery through the network might be achieved. This may be derived from measurements made during preceding exchanges of information between the server and the client, in which, for example, the client requested the content; or it may be a value derived by the server based on how many other streams it is already delivering, the time of day or some other factor; or it may simply be a constant value. We refer to this initial mean bit delivery rate as $m_{INIT}$. As the quality of GOPs is determined and as they are transmitted, we will update this mean bit delivery rate, being referred to as $m_I$ at the time when the quality of GOP I+1 is to be determined. Thus $m_I$ is not necessarily the actual bit rate at time I; rather, it is the most up-to date estimate of bit-rate available to be used in calculations concerning GOP I+1.

203 We determine a start up delay to be signalled to the receiver, indicating how long the receiver should wait between first receiving data to decode and removing all of the data representing the first GOP instantaneously from its buffer and starting to decode that data. This value may be set to a fixed value, such as more or less than one GOP period, or may be set according to the video asset to be delivered, being longer for an asset for which the initial video scenes are particularly difficult to compress. We denote this start up delay figure as D.

Note that in this example we make the quality decisions on a GOP by GOP basis but in a practical implementation one could, if desired, do the video processing on a picture basis (or even smaller, e.g. slice of a picture), i.e. the sender would make a decision for a GOP, and then transmit in turn each of the pictures in the GOP, and the receiver may wait until all of the first picture has been delivered before starting decoding. In other words, a start up delay could be less than a GOP period. Naturally the GOP level mathematics in this flowchart would require appropriate modification.

205 Set an estimated receiver buffer fullness tally, F, to indicate how much data will be in the receiver buffer immediately before instantaneously removing all of the bits representing the first GOP. This depends on the start up delay D and the initial mean bit delivery rate as $m_{INIT}$.

$$F = D \cdot m_{INIT}$$

207 Define a state value *s* as the quantised buffer fullness tally.: s = F * (number of quantised buffer states - 1) / maximum buffer size, where '/' indicates integer division with rounding.

209 Mark the state variable $S_{s,0}$ as active and assign for that state *s* an initial cost $C_{s,0} = 0$, and set buffer level $B_{s,0}$ to F. We initialise a set of state variables $S_{s,i}$ to "inactive state", for each possible state s for each GOP i (i= 1 to the end of the asset).

211 The quality for the first GOP, $j_0$, is selected from one of the available quality levels. This decision may be based on the estimate of the achievable network throughput, or may be constant, so that, for example, the mid-range quality is selected.

213 Record the quality at which the first GOP was transmitted, jo, as $Q_{s,1}$.

217 The first GOP is transmitted at the selected quality level, and the value of the start up delay, D, is also transmitted. The transmission of the GOP is monitored, and the statistics of the network throughput are updated to derive, if necessary, a new value of mean bit rate, $m_0$, and parameters indicative of its variability.

219 We set a pointer I to zero: as the method proceeds, this pointer will point to the index of the GOP for which the quality was most recently determined.

Then, in order to determine the quality of the next GOP (and in turn the subsequent GOPs):

221 A local pointer i is set to I.

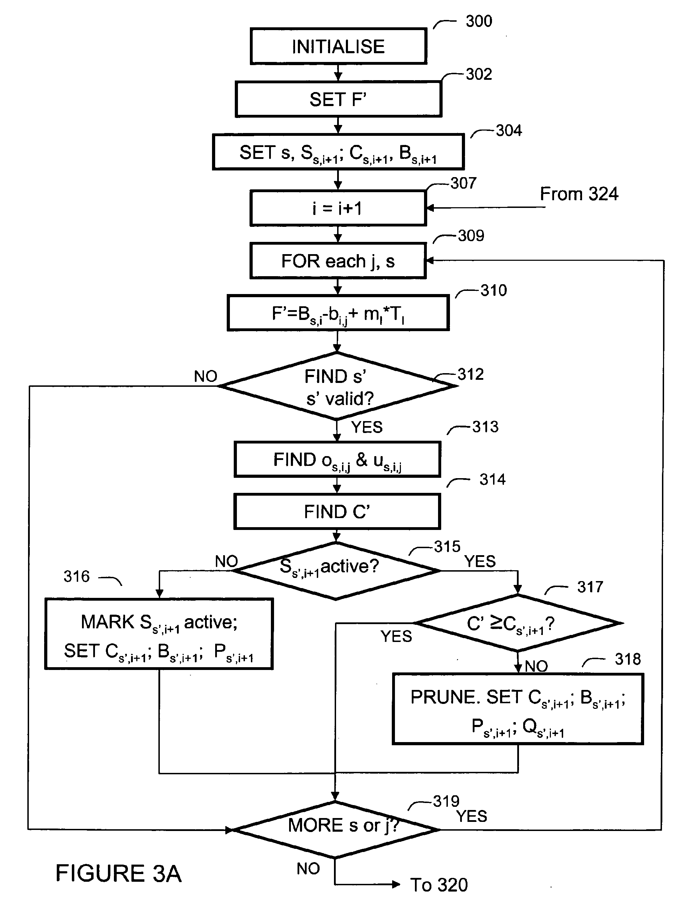

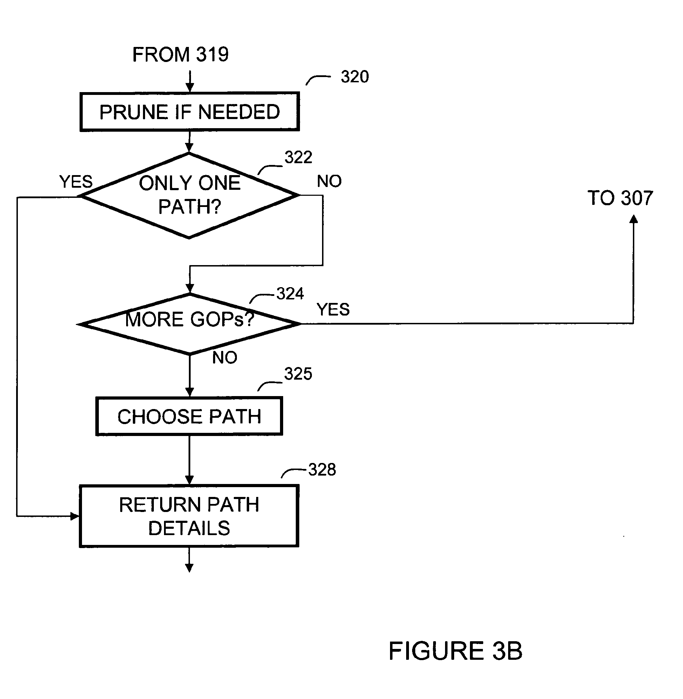

223 The procedure shown in the flowchart of Figure 3 is invoked, as described below, to select the quality.

225 The pointer I is incremented (I= I+ 1).

227 The GOP (GOP I) is transmitted at the selected quality level. The transmission of the GOP is monitored, and the statistics of the network throughput are updated to derive, if necessary, a new value of mean bit rate, $m_I$, and parameters indicative of its variability.

229 This process, starting with the selection of quality through transmission of the GOP at the selected quality and monitoring of that transmission is repeated from Step 221 until delivery of the media asset is complete.

In order to select the quality of the next GOP, we consider the problem as that of choosing a path through a lattice, where each node represents the resulting buffer state (suitably quantised) after transmitting a GOP at a given quality, and where each link represents a quality selection decision. The buffer state is obtained by dividing the expected buffer fullness, derived using the estimated network throughput, by a fixed parameter. We find that using 300 states between buffer empty and buffer full provides satisfactory results. In this case we would determine the state s from the buffer fullness B according to s = B * 299 / BufferSize, where '/' indicates integer division with rounding. More generally:

$$ s = int \, ( \, ( \, B \, * \, ( \, ( \, number\_of\_states \, - \, 1 \, ) \, / \, BufferSize \, ) \, ) + 0.5 \, ) $$

where "int" means the integer part of (so that, for example, int(3.9) = 3).

In some cases it may be beneficial to define further states beyond buffer overflow and beyond buffer underflow because the estimated buffer fullness is simply an estimate: the actual value at that time may be more or less. By allowing states beyond the buffer size, we are able to propagate more paths through the trellis, and hence possibly find a better solution. For example, we may allow states from -100 to 400, and consider buffer fullness levels that would lead to values of s outside of this range as invalid, and prune such paths from the trellis.

Our above-mentioned international patent application no. PCT/GB2008/003691 gives further details of a buffer state Viterbi trellis used for constant quality video encoding.

We turn now to the flowchart of Figure 3:

300 Initialisation. We re-initialise the set of state variables $S_{s,k}$ to "inactive state", for each possible state s for each GOP k from GOP k=I+1 to the end.

302 Set an estimated receiver buffer fullness tally, F, to indicate how much data will be in the receiver buffer immediately before the bits of GOP I+1 are all instantaneously removed, using knowledge of how much data has already been sent to the receiver, S, how much more data is expected to be sent by the time that the receiver is ready to decode GOP I+1, using the current estimated mean bit delivery rate as $m_I$ and the start up delay, D, and how much data the receiver would have removed for decoding, given by which qualities of encoding, $j_i$, have been decoded. Denoting the time elapsed since the start of transmission as $t_I$, the additional time until GOP I+1 is to be decoded at the receiver as x, and the GOP periods as $T_i$, we observe that

$$ t_I + x = D + \sum_{i=0}^{I} T_i $$

Observing that the amount of data already transmitted, S, is equal to the amount of data that will have been removed from the receiver buffer by this time, allows us to set F as

$$ F = m_I \cdot x $$

304 Define a state value *s* as the quantised buffer fullness tally.: s = F * (number of quantised buffer states - 1) / maximum buffer size, where '/' indicates integer division with rounding. Mark the state variable $S_{s,i+1}$ as active, assign for that state *s* an initial cost $C_{s,i+1} = 0$, and set buffer level $B_{s,i+1}$ to F.

## 307 Set i = i+1.

309 Perform the actions in steps 110 to 119 for each value of quality index j and for each state s for which the state variable $S_{s,i}$ is not marked as inactive.

310 Determine a new value of receiver buffer fullness tally by adding the estimated number of bits received by the receiver during $T_i$ and subtracting the number of bits $b_{i,j}$ consumed by the decoder:

$$F' = B_{s,i} - b_{i,j} + (m_I * T_i).$$

312 Determine the state, s', at the next level of the trellis, i+1, as the quantised value of the buffer fullness F'. If this is not a valid state, as it represents an invalid level of fullness, no further processing of this potential path in the trellis is considered, and control passes to step 319.

$$s' = F' * (\text{number of quantised buffer states} - 1)/ \text{ maximum buffer size (with rounding)}.$$

313 Calculate the overflow probability $o_{s,i,j}$ and underflow probability $u_{s,i,j}$ from the estimated buffer fullness tally F' and the standard deviation $\sigma_i$ of the number of transmitted bits, as described in more detail below.

314 Determine the cost, C', of the path to future state s' from the state s, according to

$$C' = C_{s,i} - A.q_j.T_i + K.abs(q_j - Q_{s,i}) + K'.u_{s,i,j} + K''.o_{s,i,j}$$

where $Q_{s,i}$ is the quality at which GOP i-1 was coded on the path through the trellis to state s for GOP i.

$o_{s,i,j}$ is the probability of buffer overflow just before we remove timeslice $i+1$ at when timeslice i has been encoded at quality $j$ starting in state s,

$u_{s,i,j}$ is the probability of buffer underflow just after we remove timeslice $i$ at quality $j$ starting in state s.

315 If state variable $S_{s',i+1}$ is marked as active go to step 317, else go to step 316.

316 Mark the state $S_{s',i+1}$ as active and set the cost of this state $C_{s',i+1}$ to C', the buffer fill tally of this state $B_{s',i+1}$ to F' and set the parent of this state $P_{s',i+1} = s$. Also record the quality used to arrive at this state as $Q_{s',i+1} = q_j$. Go to step 119.

317 If the cost C' >= $C_{s',i+1}$, go to step 119, else go to step 318.

318 Prune the path in the trellis from state $P_{s',i+1}$ at GOP i to state s' at GOP i+1. Overwrite the previously stored values by setting $C_{s',i+1}$ to C', $B_{s',i+1}$ to F' and $P_{s',i+1} = s$. This creates a path in the trellis from state s at GOP i to state s' at GOP i+1. Also record the quality used to arrive at this state as $Q_{s',i+1} = q_j$

319 End of processing for this combination of s and j. If there are more to process, return to step 309.

320 For each state s for which the state variable $S_{s,i}$ is not marked as inactive determine if any future paths from s have survived to this point. If none prune out the whole path leading to this state.

322 If there is only one possible path from GOP I to GOP I+1 after the pruning process then exit to step 328.

324 If there are more GOPs to be processed then repeat for next GOP by returning to step 307; otherwise (325), from the set of paths arriving to the end of the file choose the path that leads to the best final cost, prune all other paths and exit to step 328. Note other choices for the best final state are possible: best cost after one GOP (or any number), highest lowest buffer level along trellis path etc.

328 Return the chosen quality transition path

We return now to discussion of the estimation of the mean bit rate, its standard deviation, and the derived overflow and underflow probabilities.

In order to be able to calculate the overflow and underflow probabilities in step 313, we need to estimate the number of bits we would expect to be able to get through the network by the given time and a measure of the accuracy of that estimate. We prefer to estimate a mean number of bits and its standard deviation, and then assume a Gaussian distribution to calculate the probabilities.

We measure the average bit rate through the network for the immediately preceding groups of pictures, averaging over say 10 to 100 groups of pictures. We then assume that this mean bit rate, $m_I$, is sustained into the future.

The mean number of bits, m, delivered by some time in the future, T, is then simply $m = m_l * T$.

We found in a simple simulation of a network in which sessions started and stopped randomly and the total bandwidth was shared equally between them, that the mean number of bits delivered by a given time did vary in this way and that the standard deviation of the number of bits delivered increased roughly in proportion the mean and to the square root of time up to a limit of about 25% of the mean.

In measurements made on a network we found similar behaviour on average, with standard deviation again varying with the square root of time up to a limit. In some specific cases we found the standard deviation was mostly constant over time, at about 10% of the mean.

In our experiments we have achieved good performance when we model the standard deviation, $\sigma_i$, as increasing in proportion to the mean and to the square root of time (measured from the current time into the future) up to a limit of 25% of the mean after 25 seconds and remaining at 25% of the mean subsequently. This can be expressed as:

$$\sigma_i = \min\left(0.05\, m \sqrt{\sum_{k=I+1}^{i} T_k}, \ 0.25\, m\right)$$

Another option is to continually collect statistics as to bit rate and compute the actual standard deviation over a recent time window.

We then use these results to determine the probability of a path through the trellis from GOP i to GOP i+1 resulting in overflow (or underflow) at GOP i+1, which is added into the cost of the transition from GOP i to GOP i+1, as at Step 114 above.

We have determined the estimated buffer fullness F' at Step 110. The probability, given the standard deviation $\sigma_i$ that the buffer fullness will actually reach zero - i.e. a deviation of $(B_{s,i} - b_{i,j})/ \sigma_i$ times the standard deviation can be looked up in a Gaussian cumulative probability table. Alternatively it can be calculated from

$$u_i = \frac{1}{\sigma_i \sqrt{2\pi}} \exp\left\{ - \frac{\left(B_{s,i} - b_{i,j}\right)^2}{2\sigma_i^2} \right\}$$

Similarly, the buffer would overflow if the fullness exceeds the buffer size B. The probability of this can be found by looking up $(F' - B)/ \sigma_i$ in a Gaussian cumulative probability table, or from

$$o_i = \frac{1}{\sigma_i \sqrt{2\pi}} \exp\left\{ - \frac{\left(F' - B\right)^2}{2\sigma_i^2} \right\}$$

In alternative embodiments of the invention we introduce the possibility of:

-  Allowing the trellis to determine the quality for more than one GOP, and only running it again if there is a serious difference between actual and expected network throughput;

-  Working with a look ahead window of frames, rather than looking all the way to the end, so that it can be used for real time encoding.

The method caters for variability in the actual bandwidth through the incorporation of the under and over flow probabilities. It can be further extended however by varying the bandwidth estimate as we propagate through the lattice based on other available information about future network bandwidth. There may be known events such as other streams about to end, which introduce a dependence on other streams but which would mean an imminent bandwidth increase. Downstairs rate curves were introduced in the context of optimal bandwidth reservation for VBR coded video (See K. Sun & M. Ghanbari, An Algorithm for VBR video transmission scheme over the Internet, in Proceedings of International Symposium on Telecommunications (IST2003), Isfahan, Iran, August 16-18, 2003). Any VBR asset will have a peak rate requirement to ensure no buffer starvation problems at the most difficult part of the content. Once this point is passed the next peak rate will be lower and so on. This series of peak rates form a downstairs stepping profile and this future profile of all currently streamed assets may also be available. If streamed at a rate proportional to this rate requirement (e.g. using MulTCP and variable N) this would suggest with no new streams added there will be more rate and less contention moving forward in time.

We may possibly have some knowledge of what types of assets might be requested at this time of day (EPG input, children's programs, sports events) and hence may be able to change how conservative or optimistic our future bandwidth projection will be.

Additionally if one asset would consistently cause buffer overrun (i.e. sustained rate > highest quality rate) and using TCP then flow control would cause the streamer to throttle back and other assets would get a higher rate than otherwise expecting. Conversely if one asset would consistently cause buffer underflow and sufficient playback delay was not enforced then this would most likely be dropped and again more rate would then be available to the other streams.

It will be observed that the system described here differs from our earlier international patent application in

a) having constant perceptual quality and hence variable rate encodings available at the server and information on future bit consumption requirements for different qualities. For any given transmission rate one may plan a future stream switching route taking the variability of the rate demand of each different quality and the projected buffer levels at the client into account.

b) We can exploit known future events (e.g. one stream due to end shortly), client buffer status and future bandwidth demand in our planning to get a better trade-off of quality to available rate.

If we are using schemes to influence the share of any bandwidth a particular stream receives these algorithms can be built in to the future projections to give a better result.

## Claims

1. A method of video coding comprising

a) dividing a sequence to be encoded into a plurality of temporal portions;
b) analysing the sequence to determine at least for each portion after the first, in accordance with a plurality of encoding quality settings, (i) a quality metric for the portion and (ii) the number of bits generated by encoding the portion at that quality setting;
c) analysing the data to choose a set of quality settings, one per portion, that tends to minimise a combined quality cost for the sequence; wherein the combined quality cost is the sum of individual quality costs each of which is a function of the quality metric of the respective encoded portion; and
d) encoding the sequence using the chosen quality settings

**characterised by**

e) estimation of receiver buffer fullness and the standard deviation thereof;
f) and, in determining each individual quality cost, determining, from said estimates, the probability of buffer underflow and or overflow, the cost being a function also of the underflow and/or overflow probability.

2. A method according to claim 1 in which the receiver buffer fullness and the standard deviation thereof are estimated from measurements of the actual transmitted bit rate.

3. A method according to claim 1 in which a mean bit rate that can be transmitted is estimated from measurements of the actual transmitted bit rate, the estimated receiver buffer fullness is estimated using this estimated mean bit rate and the standard deviation of the estimated receiver buffer fullness after a time is estimated as a predetermined function of the mean bit rate and the time that over which the estimated bit rate contributes to the buffer fullness.

4. A method according to claim 3 in which the standard deviation of the receiver buffer fullness, up to a predetermined limit, is proportional to the mean bit rate and the square root of the time.

CPU
3

Memory
5

1

Video
Interface
6

7

40

41

4

Video
Interface
1

2

FIGURE 1

ENCODE; RECORD $b_{i,j}$ — 200

DETERMINE $m_{INIT}$ — 202

SET D — 203

SET F — 205

SET s — 207

MARK $S_{s,0}$ ACTIVE;
SET $C_{s,0}$, $B_{s,0,}$ Ss,i — 209

SELECT $j_0$ — 211

$Q_{s,1} = j_0$ — 213

TRANSMIT GOP 0;
MONITOR NETWK — 217

I=0; SET S — 219

i = I — 221

FIND j FOR GOP i+1 (Fig.3) — 223

I=I+1 — 225

TRANSMIT GOP I — 227

MORE GOPs? — 229

YES

NO

END

FIGURE 2

```
                    ┌─────────────────────┐  ── 300
                    │     INITIALISE      │
                    └─────────────────────┘
                              │
                    ┌─────────────────────┐  ── 302
                    │       SET F'        │
                    └─────────────────────┘
                              │
                ┌──────────────────────────────┐  ── 304
                │  SET s, S_{s,i+1}; C_{s,i+1}, B_{s,i+1}  │
                └──────────────────────────────┘
                              │
                    ┌─────────────────────┐  ── 307      From 324
                    │      i = i+1        │◄─────────────
                    └─────────────────────┘
                              │
                    ┌─────────────────────┐  ── 309
                    │     FOR each j, s   │◄──────────────┐
                    └─────────────────────┘               │
                              │                           │
                ┌──────────────────────────────┐  ── 310  │
                │   F'=B_{s,i}-b_{i,j}+ m_l*T_l │         │
                └──────────────────────────────┘          │
                              │                           │
              NO         ╱─────────────────╲  ── 312       │
         ┌───────────── │    FIND s'         │             │
         │              │    s' valid?       │             │
         │               ╲─────────────────╱              │
         │                      │ YES                      │
         │              ┌─────────────────────┐  ── 313    │
         │              │  FIND o_{s,i,j} & u_{s,i,j}  │    │
         │              └─────────────────────┘           │
         │              ┌─────────────────────┐  ── 314    │
         │              │      FIND C'        │            │
         │              └─────────────────────┘           │
         │                      │                          │
         │      NO       ╱─────────────────╲  ── 315  YES  │
         │     ┌─────── │    S_{s',i+1} active? │──────┐    │
         │     │         ╲─────────────────╱          │    │
  316 ──│     ▼                                        ▼  ── 317
    ┌────────────────────────┐          ╱─────────────────╲
    │  MARK S_{s',i+1} active;│   YES  │   C' ≥ C_{s',i+1}?  │
    │  SET C_{s',i+1}; B_{s',i+1}; P_{s',i+1} │◄───│                    │
    └────────────────────────┘          ╲─────────────────╱
         │                                    │ NO    ── 318
         │                      ┌──────────────────────────────┐
         │                      │ PRUNE. SET C_{s',i+1}; B_{s',i+1}; │
         │                      │       P_{s',i+1}; Q_{s',i+1}       │
         │                      └──────────────────────────────┘
         │                                    │
         │                      ╱─────────────────╲  ── 319  YES
         └──────────────────── │    MORE s or j?    │──────────┘
                                ╲─────────────────╱
                                       │ NO
                                       ▼
                                    To 320
```

FIGURE 3A

FIGURE 3B

Europäisches
Patentamt

European
Patent Office

Office européen
des brevets

**EUROPEAN SEARCH REPORT**

Application Number

EP 09 25 0628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 248 466 A1 (MITSUBISHI ELECTRIC CORP [JP]) 9 October 2002 (2002-10-09)<br>* paragraph [0035] *<br>* paragraph [0063] - paragraph [0067] *<br>* paragraph [0088] - paragraph [0096] *<br>----- | 1-4 | INV.<br>H04N7/26<br>H04N7/30 |
| Y | ORTEGA A ET AL: "OPTIMAL TRELLIS-BASED BUFFERED COMPRESSION AND FAST APPROXIMATIONS"<br>IEEE TRANSACTIONS ON IMAGE PROCESSING, IEEE SERVICE CENTER, PISCATAWAY, NJ, US, vol. 3, no. 1, 1 January 1994 (1994-01-01) , pages 26-39, XP000433559<br>ISSN: 1057-7149<br>* the whole document *<br>----- | 1-4 | |
| Y | WO 2006/078594 A1 (THOMSON LICENSING [FR]; RICHARDSON JOHN WILLIAM [US]; GOEDEKEN RICHARD) 27 July 2006 (2006-07-27)<br>* page 2, line 26 - page 3, line 14 *<br>* page 10, line 20 - page 12, line 4 *<br>----- | 1-4 | |
| | | | TECHNICAL FIELDS SEARCHED (IPC)<br><br>H04N |

The present search report has been drawn up for all claims

| Place of search | Date of completion of the search | Examiner |
|---|---|---|
| Munich | 6 November 2009 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 25 0628

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2009

| Patent document cited in search report | | Publication date | Patent family member(s) | | Publication date |
|---|---|---|---|---|---|
| EP 1248466 | A1 | 09-10-2002 | AU<br>WO | 3054801 A<br>0178399 A1 | 23-10-2001<br>18-10-2001 |
| WO 2006078594 | A1 | 27-07-2006 | BR<br>CN<br>EP<br>JP<br>US | PI0606627 A2<br>101107863 A<br>1839446 A1<br>2008527945 T<br>2008137736 A1 | 07-07-2009<br>16-01-2008<br>03-10-2007<br>24-07-2008<br>12-06-2008 |

EPO FORM P0459

For more details about this annex : see Official Journal of the European Patent Office, No. 12/82

## EP 2 227 023 A1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 08250815 A

- GB 2008003691 W

**Non-patent literature cited in the description**

- Adaptive Streaming within the 3GPP Packet-Switched Streaming Service. *IEEE Network,* March 2006
- Subject responses to constant and variable quality video. **D. Hands ; K. Cheng.** Human Vision and Electronic Imaging XIII. SPIE Electronic Imaging, 2008

- **K. Sun ; M. Ghanbari.** An Algorithm for VBR video transmission scheme over the Internet. *Proceedings of International Symposium on Telecommunications,* 16 August 2003